# EUROPÄISCHE PATENTSCHRIFT

(11) **EP 4 177 114 B1**
(45) Veröffentlichungstag und Bekanntmachung des Hinweises auf die Patenterteilung: **27.12.2023**
(21) Anmeldenummer: 22202705.4
(22) Anmeldetag: 20.10.2022
(51) Int. Cl.: B60R 19/24, B60R 19/18

(54) **STOSSFÄNGER MIT INTEGRIERTEM VERSTÄRKUNGSBLECH**
BUMPER WITH INTEGRATED REINFORCING PLATE
PARE-CHOCS DOTÉ D'UNE TÔLE DE RENFORCEMENT INTÉGRÉE

(30) Priorität: 05.11.2021 DE 102021128844
(43) Veröffentlichungstag der Anmeldung: 10.05.2023
(73) Patentinhaber: Benteler Automobiltechnik GmbH, 33102 Paderborn (DE)
(72) Erfinder: Schiller, Andreas, 59590 Geseke (DE); Mollemeier, Herr Elmar, 33129 Delbrück (DE)
(74) Vertreter: Osterhoff, Utz

(56) Entgegenhaltungen:
- CN-U- 208 411 651
- DE-A1-102013 015 421
- DE-A1-102017 123 325
- DE-A1-102018 129 724
- DE-A1-102020 104 097

## Beschreibung

Die vorliegende Erfindung betrifft einen Stoßfängerquerträger für ein Kraftfahrzeug gemäß den Merkmalen im Oberbegriff von Anspruch 1.

Aus dem Stand der Technik sind Stoßfängerquerträger bekannt, die an Kraftfahrzeugkarosserien vorderseitig bzw. endseitig gekoppelt sind. Zumeist erfolgt dies unter Eingliederung von Crashboxen. Ein solcher Stoßfängerquerträger ist zumeist aus einem metallischen Werkstoff hergestellt, insbesondere aus einem Stahlwerkstoff oder Leichtmetallwerkstoff und kann auch als Bumper, Stoßfänger oder Querträger bezeichnet werden.

Ein Stoßfängerquerträger soll eine hinreichende Steifigkeit aufweisen, dass insbesondere beispielsweise bei einem Pohl- oder Pfahltest eine hinreichende Abstützwirkung erreicht wird. Der Stoßfängerquerträger selbst ist also möglichst steif ausgebildet. Das Kraftfahrzeug prallt auf einen Gegenstand auf und die Crashboxen deformieren sich, hierbei wird Crashenergie in Umformarbeit gewandelt.

Es gibt jedoch auch Stoßfängerquerträger, die sich in einem gewissen Maße verformen sollen, ohne dabei eine Reststeifigkeit zu verlieren. Insbesondere soll der Stoßfängerquerträger beispielsweise bei einem Pohl- oder Pfahltest nicht bei Überschreiten eines Kraftniveaus einknicken bzw. kollabieren.

Hierzu ist beispielsweise aus der WO 20 2005 3626 A1 ein Stoßfängerquerträger bekannt, der in einem mittleren Längenabschnitt ein Verstärkungsblech aufweist. Das Verstärkungsblech hilft, den Stoßfängerquerträger im mittleren Bereich zu versteifen.

Weiterhin ist aus DE 10 2017 123 325 A1 eine Stoßfängeranordnung nach dem Oberbegriff des Anspruchs 1 bekannt.

Aufgabe der vorliegenden Erfindung ist es, einen Stoßfängerquerträger bereitzustellen, der eine hohe Steifigkeit gegen Biegung aufweist, gleichzeitig jedoch bei einem Pohl- oder Pfahltest durch Eigenverformung Crashenergie abbaut, ohne dabei selbst einzuknicken.

Die zuvor genannte Aufgabe wird von einem Stoßfängerquerträger für ein Kraftfahrzeug mit den Merkmalen im Anspruch 1 gelöst.

Vorteilhafte Ausgestaltungsvarianten sind Gegenstand der abhängigen Ansprüche. Der erfindungsgemäße Stoßfängerquerträger für ein Kraftfahrzeug erstreckt sich in Kraftfahrzeugquerrichtung. Dies erfolgt in der Regel über ein Großteil der Kraftfahrzeugbreite. Der Stoßfängerquerträger selbst ist aus metallischem Werkstoff oder auch aus einem Leichtmetallwerkstoff hergestellt. Der Stoßfängerquerträger weist einen hohlprofilartigen Querschnitt auf, insbesondere eine Hohlkammer.

Dieser Querschnitt ist durch ein Hutprofil hergestellt, welches mit einem Schließblech verschlossen ist. Der Querschnitt ist insbesondere wiederum eckig, insbesondere rechteckig ausgebildet. Ein Innenraum des Querschnitts ist insbesondere eckig, ganz besonders bevorzugt rechteckig ausgebildet. Der Stoßfänger ist über Crashboxen an einem Kraftfahrzeug festgelegt. Es kann somit auch eine Stoßfängeranordnung benannt sein. Erfindungsgemäß zeichnet sich der Stoßfängerquerträger dadurch aus, dass in einem mittleren Längenabschnitt ein separates Verstärkungsblech eingesetzt ist. Die Tiefe des Verstärkungsblechs in Kraftfahrzeuglängsrichtung nimmt zu den Enden des Verstärkungsbleches ab. Mithin sind die Enden des Verstärkungsbleches verjüngt.

Das Verstärkungsblech ist als separates und insbesondere eigenständiges Bauteil ausgebildet. Das Verstärkungsblech ist somit ein separates Bauteil gegenüber dem Schließblech. Das Verstärkungsblech ist ebenfalls ein separates Bauteil gegenüber dem Querträger, insbesondere dem Hohlprofil des Querträgers.

Hierdurch wird überraschenderweise erfindungsgemäß folgender Vorteil erreicht. Bei einem Auftreffen eines Pohls oder Pfahls, insbesondere mittig des Stoßfängerquerträgers wird der Stoßfängerquerträger bogenförmig eingedrückt bzw. deformiert sich bogenförmig. Durch das Verstärkungsblech im Querschnitt bleibt die Bogenform während des Eindringens möglichst lange erhalten. Ein Einknicken des Querschnitts wird durch das Verstärkungsblech vermieden. Dadurch, dass nunmehr die Enden des Verstärkungsbleches verjüngt sind, schmiegt sich der Querschnitt des Hohlprofils des Stoßfängerquerträgers durch Verformung an die Enden des Verstärkungsbleches an. Ein Einknickvorgang wird somit möglichst lange vermieden. Eine gezielte Biegung bzw. kurvenförmige Deformation wird während des Eindringens des Pohl oder Pfahls hiermit über den Längsverlauf des Querträgers gefördert.

Im Ergebnis kann somit eine sichere kurvenförmige Deformation des Querträgers bis zum Erreichen eines voreingestellten Lastniveaus erreicht werden, ohne dass zu befürchten ist, dass der Querträger einknickt und damit ein Durchschlagen bzw. ein Durchdringen des Pohls oder Pfahls auf dahinterliegende Antriebsaggregate, Motoren und/oder auch den Fahrgastraum erfolgt. Es kann somit eine hohe Steifigkeit bzw. ein hoher Restwiderstand unter gleichzeitiger kontrollierter Verformung, mithin auch Weichheit bzw. Crashenergieabbau des Stoßfängerquerträgers erreicht werden. Aufwendige weitergehende Maßnahmen zur Nachbearbeitung des Stoßfängerquerträgers werden durch einfaches Einsetzen eines Verstärkungsbleches mit verjüngten Enden vermieden.

Damit eine Montage der Verstärkungsbleche möglich ist, ist vorgehsehen, dass das Hohlprofil als Hutprofil ausgebildet ist, und mit einem Schließblech verschlossen ist. Das Schließblech weist auf die Kraftfahrzeuglängsrichtung nach vorn zeigend mithin die Öffnung des Hutprofils nach vorn zeigend, welche dann mit dem Schließblech verschlossen ist. Das Schließblech bildet in diesem Falle die Vorderwand des Stoßfängerquerträgers. Durch den zweiteiligen Aufbau des Stoßfängerquerträgers kann somit das Verstärkungsblech eingesetzt werden und der Stoßfängerquerträger durch Verschweißen des Schließbleches geschlossen werden. Hierzu ist das Verstärkungsblech mit dem Schließblech gekoppelt, insbesondere verschweißt. Diese Kopplung erfolgt zumindest längenabschnittsweise, insbesondere im Endbereich der Verstärkungsbleche. Das Verstärkungsblech ist wiederum an einer Vorderwand des Stoßfängerquerträgers gekoppelt und hier insbesondere je nach Querschnittskontur des Schließblechs selber anliegend. Die verjüngten Enden ergeben dann einen größeren Abstand im Einbauzustand zur Rückwand des Stoßfängerquerträgers.

Das Schließblech hat in einem zentralen Mittelabschnitt besonders bevorzugt eine Tiefe, die 70 % bis 100 %, bevorzugt 80 % bis 90 % der Tiefe des Hohlprofils des Stoßfängerquerträgers entspricht. Die verjüngten Enden nehmen dann in Kraftfahrzeuglängsrichtung mit einer Tiefe derart ab, dass diese an einem äußeren Endbereich ca. 40 % oder weniger der Tiefe des Querschnitts des Hohlprofils des Stoßfängerquerträgers aufweisen.

Das Verstärkungsblech weist insbesondere keine unmittelbare Koppelung bzw. Anlage zur Rückwand des Stoßfängerquerträgers auf. Dies ermöglicht im Crashfall das Anschmiegen, mithin eine gezielte Verformung des Stoßfängerquerträgers gegenüber dem Schließblech. Mithin kann sich die Rückwand des Stoßfängerquerträgers relativ zu dem Schließblech bewegen, insbesondere in Kraftfahrzeugquerrichtung.

Weiterhin besonders bevorzugt erstreckt sich das Verstärkungsblech in Kraftfahrzeugquerrichtung über eine Länge zwischen 20 % und 50 %, bevorzugt zwischen 20 % und 40 % der Länge des Stoßfängerquerträgers selber. Weiterhin besonders bevorzugt weist das Verstärkungsblech im Querschnitt eine profilierte, insbesondere w-förmige Kontur auf. Insbesondere sind die drei Anbindungsstellen der w-Form nach vorne gerichtet angeordnet.

Das Schließblech ist besonders bevorzugt durch ein Umformverfahren hergestellt. Es kann jedoch auch rollgeformt oder extrudiert werden. Die Verjüngung der Enden wird dann besonders bevorzugt durch ein schneidtechnisches Bearbeiten hergestellt.

Alternativ können auch die Enden des Schließbleches durch ein Verprägen bzw. Abflachen in ihrer Tiefe verjüngt werden.

Das Verstärkungsblech liegt insbesondere an der Vorderwand an. Das Schließblech weist mit seiner Verjüngung dann einen bogenförmigen Verlauf um die Kraftfahrzeugvertikalachse auf, wobei die Innenseite der Bogenform jeweils über einen vorderen Stoßfängerquerträger in Fahrrichtung nach vorne orientiert bzw. beim rückwärtigen Stoßfänger entgegen der Fahrtrichtung, jedoch immer nach außen orientiert ist. Dies entspricht dann der aufnehmenden Kontur für ein zentral auftreffenden Pohl oder Pfahl. Das Verstärkungsblech weist somit keine initiale Deformation bei einem zentralen Aufprall auf.

Es hat sich weiterhin überraschenderweise gezeigt, dass der zuvor benannte Aspekt des Verstärkungsbleches durch eine Softzone in einem Obergurt und/oder Untergurt des Stoßfängerquerträgers verbessert werden kann. Die Softzone ist insbesondere durch Tailored Properties hergestellt, insbesondere ist der Werkstoff in der Softzone gegenüber dem restlichen Werkstoff des Stoßfängerquerträgers weicher ausgebildet, mithin ist die Zugfestigkeit herabgesetzt. Auch hierdurch wird eine gezielte Deformation des Stoßfängerquerträgers im mittleren Bereich, insbesondere im Bereich der verjüngten Enden des Verstärkungsbleches ermöglicht, die Steifigkeit wird durch das Verstärkungsblech sowie Vorderwand und Rückwand der Stoßfängerquerträger jedoch beibehalten.

Weitere Vorteile, Merkmale und Eigenschaften der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung.

Es zeigen:
- Figur 1: eine erfindungsgemäße Stoßfängerträgeranordnung in Draufsicht
- Figur 2 a bis c: verschiedene Querschnittsansichten
- Figur 3 a bis c: alternative Querschnittsansichten
- Figur 4 a bis c: wiederum alternative Querschnittsansichten
- Figur 5: eine alternative Ausgestaltungsvariante der Stoßfängerträgeranordnung in Draufsicht
- Figur 6 a bis d: verschiedene Querschnittsansichten zur Figur 5
- Figur 7 a und b: eine Gegenüberstellung eines Pohltests eines Stoßfängerquerträgers gemäß Stand der Technik und gemäß der vorliegenden Erfindung
- Figur 8: eine Ausgestaltung von Softzones an dem Stoßfängerquerträger

In den Figuren werden für gleiche oder ähnliche Bauteile dieselben Bezugszeichen verwendet, auch wenn eine wiederholte Beschreibung aus Vereinfachungsgründen entfällt.

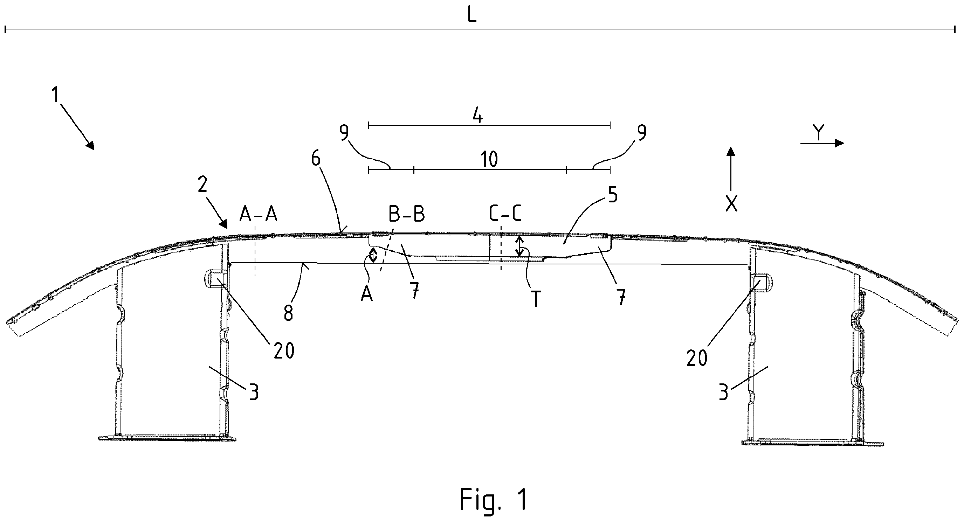

Figur 1 zeigt eine Stoßfängerquerträgeranordnung 1 in Draufsicht. Der Stoßfängerquerträger 2 ist mit Crashboxen 3 gekoppelt. Die Stoßfängerquerträgeranordnung 1 wird dann an einer nicht näher dargestellten Kraftfahrzeugkarosserie gekoppelt. Der Stoßfängerquerträger 2 weist über seine Länge einen im Wesentlichen gekrümmten Verlauf auf. Ein mittlerer Längenabschnitt 4 kann auch im Wesentlichen gerade ausgebildet sein.

In einem mittleren Längenabschnitt 4 ist in dem Stoßfängerquerträger 2 ein hier dargestelltes separates Verstärkungsblech 5 angeordnet und mit einem Schließblech 13 gekoppelt. Das Schließblech 13 mit dem Verstärkungsblech 5 ist wiederum mit der Vorderwand bzw. Flanschen des Stoßfängerquerträgers 2 gekoppelt. Es handelt sich bei dem Verstärkungsblech 5, dem Schließblech 13 und dem Stoßfängerquerträger 2 bzw. dem Hohlprofil des Stoßfängerquerträgers 2 somit um drei separate Bauteile. An den jeweiligen Enden 7 des Verstärkungsbleches 5 ist das Verstärkungsblech 5 in seiner Tiefe T verjüngt ausgebildet. Die Tiefe T ist im Wesentlichen in Kraftfahrzeuglängsrichtung X orientiert. Der mittlere Längsabschnitt 4 weist eine Längserstreckung von ca. 20 % bis 50 %, insbesondere 20 % bis 40 % der Länge L des Stoßfängerquerträgers 2 auf. Die Länge L bezieht sich auf die Kraftfahrzeugquerrichtung Y.

Durch die verjüngten Enden 7 vergrößert sich der Abstand A zwischen einer Rückwand 8 des Stoßfängerquerträgers 2 und dem jeweils verjüngtem Ende 7. Besonders bevorzugt weist über den gesamten Längsverlauf das Verstärkungsblech 5 keinen unmittelbaren Kontakt mit der Rückwand 8 des Stoßfängerquerträgers 2 auf.

Ferner ist ein jeweiliger Längenabschnitt als verschweißter Längenabschnitt 9 ausgebildet, in welchem das Verstärkungsblech mit dem Schließblech 6 verschweißt ist. Die verschweißten Längenabschnitte 9 betragen besonders bevorzugt 5 % bis 20 %, insbesondere 5 % bis 10 % des mittleren Längenabschnitts 4. Ein dazwischen liegender nicht verschweißter Längenabschnitt 10 kann sich somit im Crashfalle deformieren bzw. könnte sich die Vorderwand 6 und das Verstärkungsblech relativ zueinander bewegen.

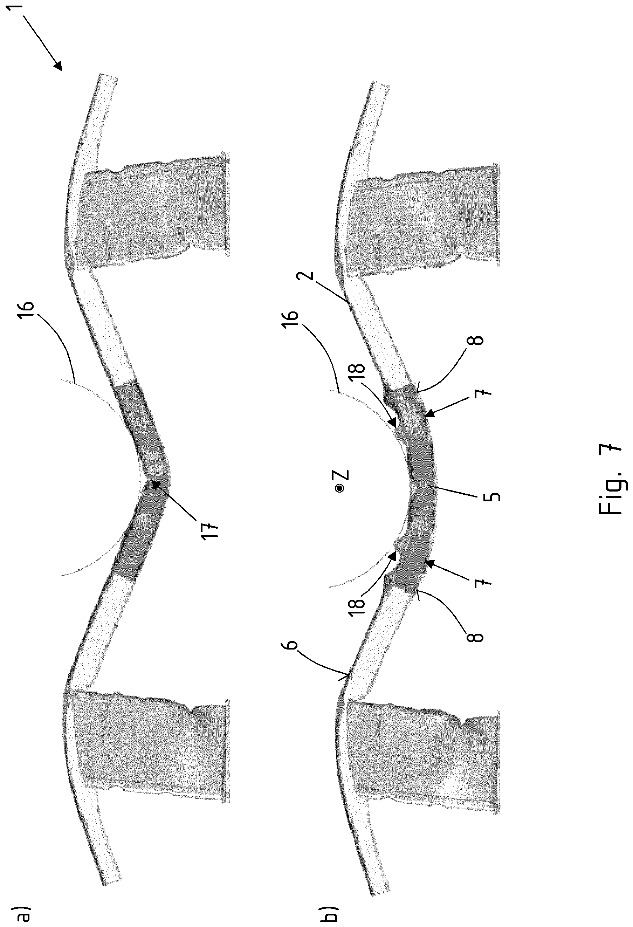

Weiterhin können besonders bevorzugt Entlastungselemente 20 an den zueinanderweisenden Seitenwänden der Crashbox 3 angeordnet sein. Die Entlastungselemente 20 können beispielsweise als Schlitz, Langloch, Rundloch oder auch Verprägung ausgebildet sein. Hier findet eine gezielte Schwächung der Crashboxen 3 statt. Bei dem in Figur 7 dargestellten Crashfall können die Crashboxen 3 somit sich aufeinander zubewegen und begünstigen damit ebenfalls eine Durchbiegung des Stoßfängerträgers 2, insbesondere gemäß Figur 7b.

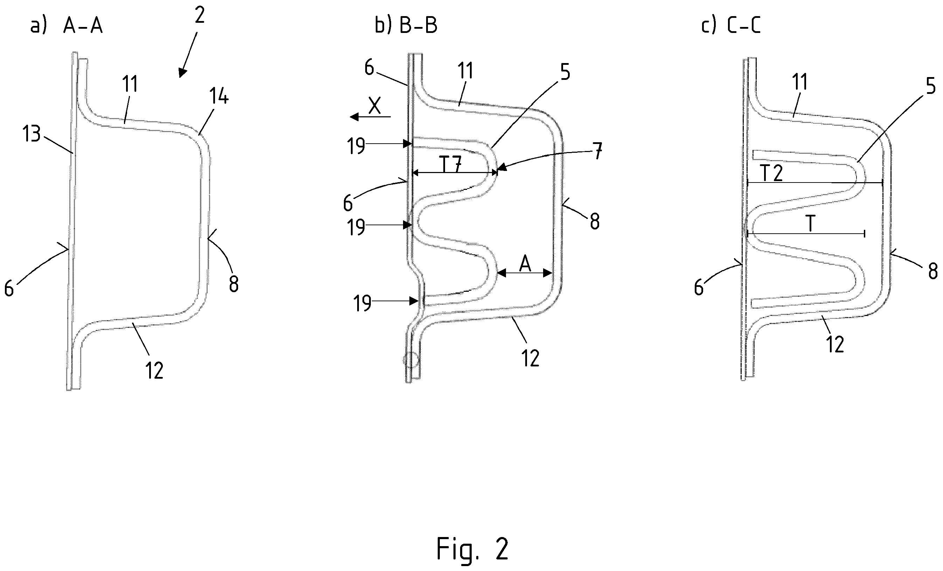

Figur 2 a, b und c zeigen jeweilige Querschnittsansichten. Zu erkennen ist, dass der Stoßfängerquerträger 2 in seinem Querschnitt ein geschlossenes hohlförmiges Profil ist. Dieses ist aus einem hutförmigen Profil 14 ausgebildet, welches die Rückwand 8 bildet sowie einen Obergurt 11 und einen Untergurt 12. Die Vorderwand 6 wird von einem Schließblech 13 ausgebildet. Das Schließblech 13 ist mit dem Hutprofil 14 insbesondere Flanschen des Hutprofils gekoppelt. Gemäß der Schnittlinien aus Figur 2b und 2c ist das Verstärkungsblech 5 in dem Hohlprofil dargestellt. In Figur 2b ist ein Endbereich 7 des Verstärkungsbleches 5 gezeigt. Dies weist eine Tiefe T7 im Endbereich 7 auf, die geringer ist, als die Tiefe T im mittleren Bereich. Die Tiefe T im mittleren Bereich ist bevorzugt 70 % bis 100 %, ganz besonders bevorzugt 80 % bis 95 % und insbesondere ca. 85 % bis 95 % der Tiefe T2 des Stoßfängerquerträgers 2 in diesem Bereich ausgebildet. Es ist somit kein unmittelbarer Kontakt zur Rückwand 8 ausgebildet. Die Tiefe T7 nimmt dann in den Endbereichen hin ab. Der Abstand A zur Rückwand 8 vergrößert sich. Hier dargestellt ist, dass der w-förmige Querschnitt des Verstärkungsblech 5 vom mittleren Bereich gemäß Figur 2c in seiner Tiefe T zu den Endbereichen 7 hin abnimmt gemäß der Figur 2b. Verschweißungen 19 sind insbesondere ausgebildet an allen Anlageflächen des w-förmigen Profils an der Vorderwand 6. Gemäß Figur 2c ist keine Verschweißung ausgebildet, sodass auch hier insbesondere in Kraftfahrzeugquerrichtung eine Relativverschiebung von Verstärkungsblech 5 und Vorderwand im Crashfall möglich ist. Der Querschnitt bleibt jedoch erhalten.

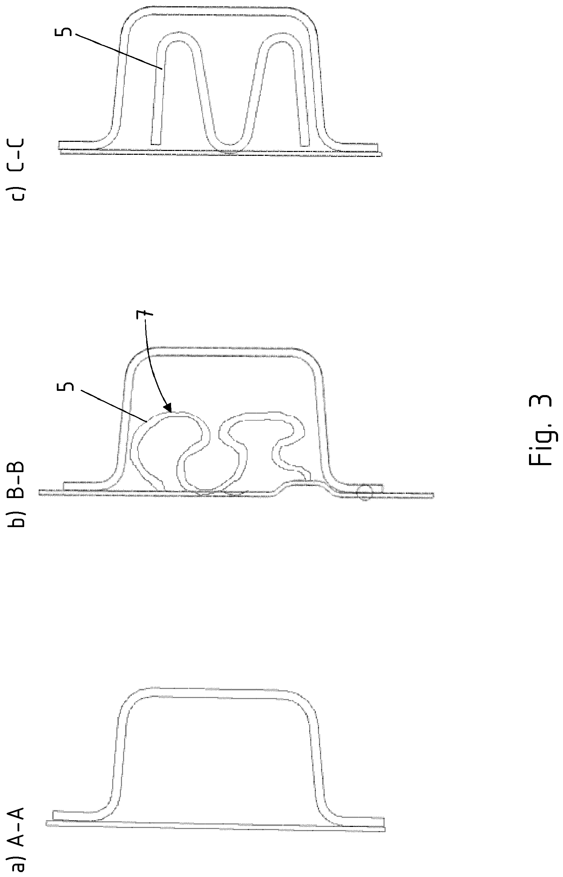

Eine alternative Ausgestaltungsvariante ist in Figur 3a, b und c darstellt. Hierbei ist der Querschnitt des Verstärkungsbleches 5 gemäß der Figur 3b abgeflacht bzw. verprägt.

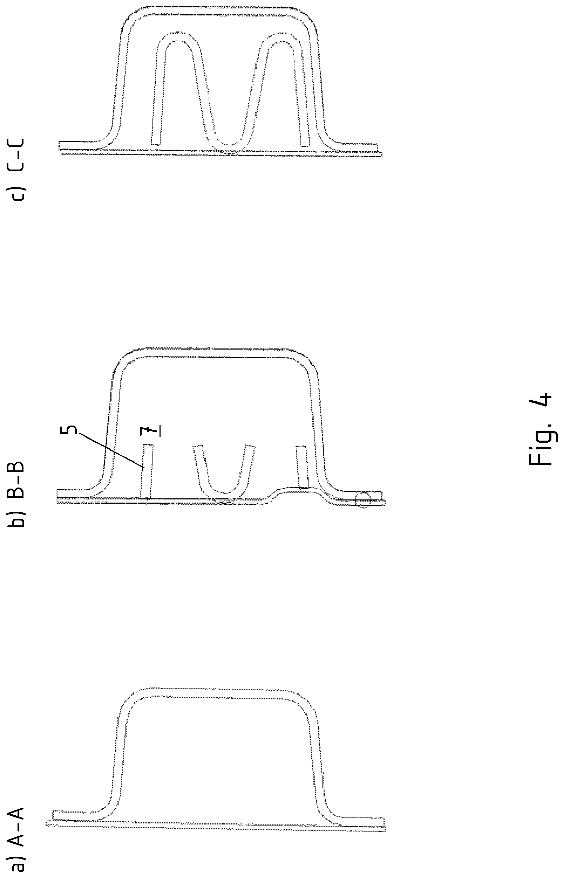

Figur 4 a, b und c zeigen eine alternative Ausgestaltungsvariante. Hier ist der Endbereich 7 des Verstärkungsbleches 5 schneidtechnisch bearbeitet, sodass Teile des w-förmigen Querschnittes weggeschnitten bzw. abgeschnitten sind.

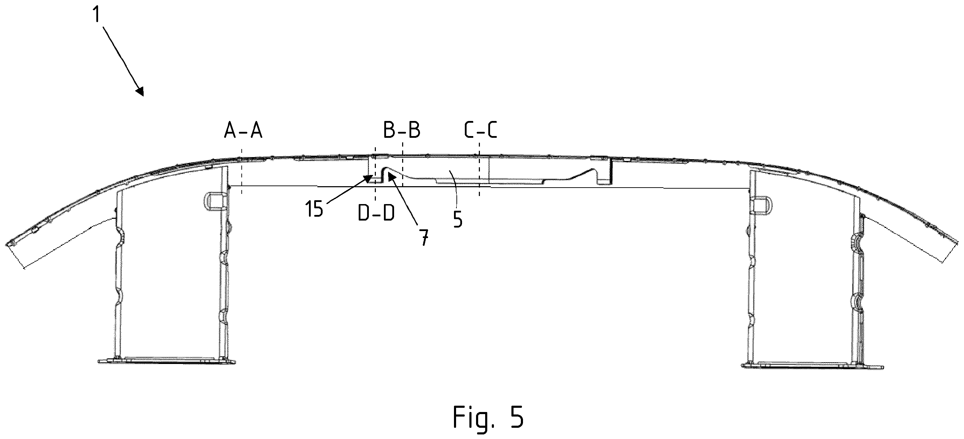

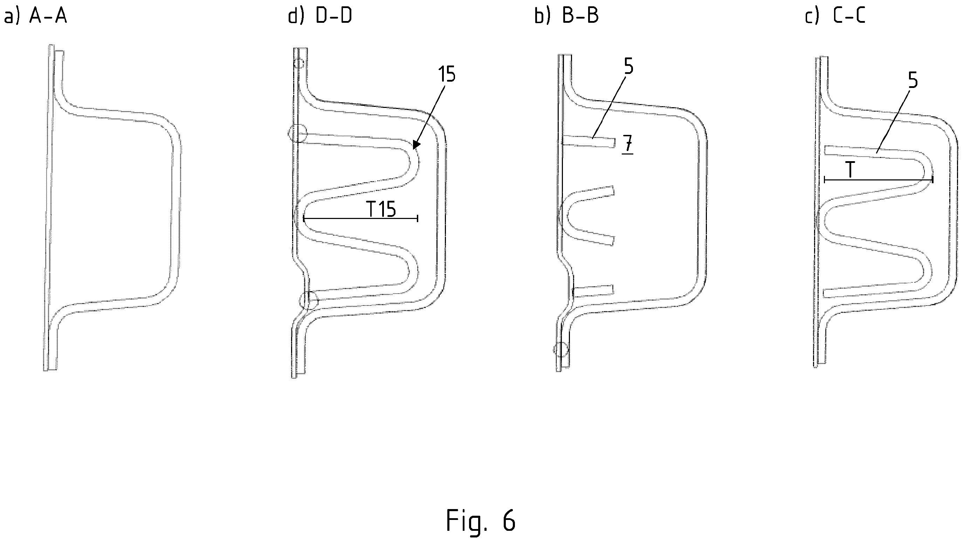

Figur 5 zeigt eine alternative Ausgestaltungsvariante zu Figur 1. An die Enden 7 des Verstärkungsprofils 5 schließt sich ein weiterer Längenabschnitt an, der wiederum eine gegenüber den verjüngten Enden 7 insbesondere vergrößerte Tiefe T im Querschnitt des Verstärkungsprofils aufweist. Dies ist gemäß der Schnittlinie D-D aus Figur 6d dargestellt. Die Tiefe T15 entspricht hierbei wiederum der Tiefe T des Verstärkungsbleches 5 im Mittelabschnitt gemäß Figur 6c. Hierdurch kann eine zusätzliche Versteifung bzw. Verstärkung für andere Crashszenarien beispielsweise den RCAR-Bumpertest erreicht werden.

Der erfindungsgemäße Effekt ist nunmehr in Gegenüberstellung in Figur 7a und b dargestellt. Die Stoßfängeranordnung 2 wird aufgrund eines Pohls bzw. Pfahls 16 eingedrückt bzw. erfährt eine Biegung bzw. kurvenförmige Deformation. Gemäß Figur 7a entsteht eine Knickstelle 17. Hierbei ist entweder kein Verstärkungsblech eingesetzt oder ein Verstärkungsblech 5 ohne sich verjüngende Enden.

Gemäß Figur 7b verformt sich die Rückwand des Stoßfängerquerträgers 8 an die verjüngten Enden 7 des Verstärkungsbleches 5 an. Hierdurch wird ein Einknicken vermieden. Die Vorderwand 6 und auch die Rückwand 8 können sich in Kraftfahrzeugquerrichtung jeweils relativ zu dem Verstärkungsblech 5 verschieben. Auf der Rückwand 8 erfolgt dies nach dem Prinzip eines Zugbandes. An der Vorderwand 6 ergeben sich leichte Aufwölbungen 18, es erfolgt jedoch keine Knickstelle bzw. ein Einknicken. Hierdurch wird es erfindungsgemäß erreicht, dass eine gezielte Verformung zum Energieabbau bereitgestellt ist, ohne dass der Stoßfängerquerträger 2 durchschlägt.

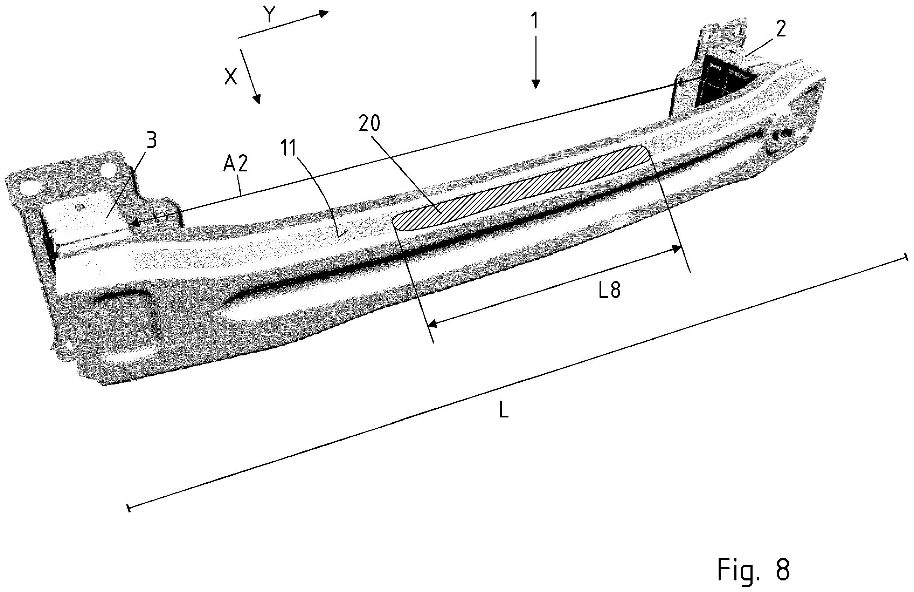

Figur 8 zeigt eine Stoßfängeranordnung 2. Hierbei ist über eine Länge L8, die besonders bevorzugt 20 % bis 40 % der Länge des Abstandes A2 zwischen den Crashboxen entspricht, eine Softzone im Obergurt 11 ausgebildet. In dieser Softzone sind die Werkstoffeigenschaften verändert, insbesondere ist die Zugfestigkeit herabgesetzt. Diese Softzone kann auch, nicht näher dargestellt, im Untergurt 12 vorhanden sein. Das Crashszenario gemäß Figur 7b wird durch das Vorhandensein der Softzone begünstigt mithin die Biegung um den Pfahl.

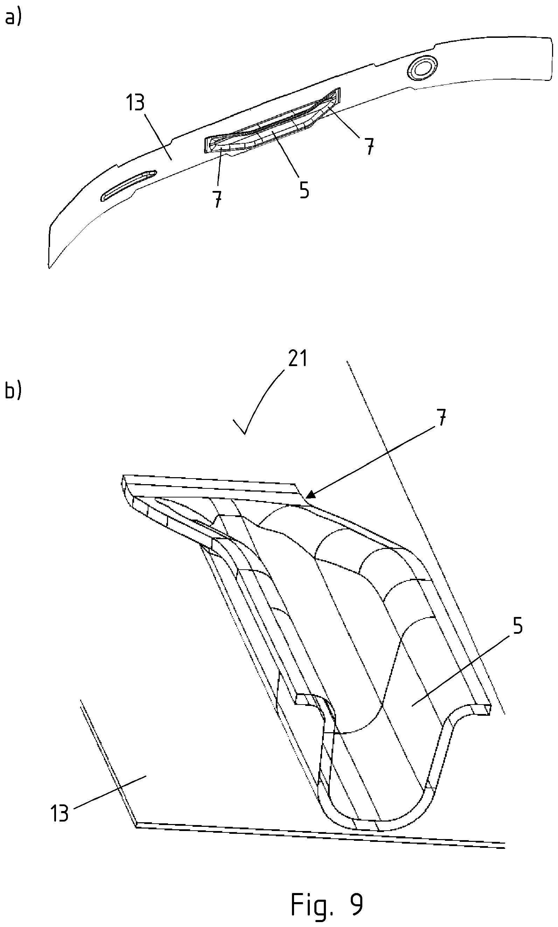

Figur 9a und b zeigen ein Schließblech 13 in einer Rückansicht und einer perspektivischen Detailschnittansicht. Das Schließblech 13 weist einen bogenförmigen Verlauf auf. An einer Rückwand 21 des Schließbleches 13 selber ist das Verstärkungsblech 5 angeordnet mit seinen verjüngten Enden 7. Insbesondere ist das Verstärkungsblech 5 gemäß Figur 9b an den verjüngten Enden 7 mit einer Rückwand 21 des Schließbleches 5 gefügt, insbesondere verschweißt. Das Schließblech 13 kann so vorbereitet dann in ein Hutprofil 14 eingesetzt werden und das Schließblech 13 zumindest längenabschnittsweise mit Flanschen des Hutprofils 14 wiederum termisch gefügt werden. Es findet dadurch eine optimale Positionierung und Montage des Verstärkungsbleches 5 statt. Das Verstärkungsblech 5 ist in diesem Falle gemäß Figur 9b zumindest längenabschnittsweise selbst hutförmig ausgebildet. Das Verstärkungsblech 5 kann somit pressformtechnisch einfach als Blechbautteil insbesondere Stahlblechbauteil hergestellt sein.

### Bezugszeichen:

- 1 -: Stoßfängerquerträgeranordnung
- 2 -: Stoßfängerquerträger
- 3 -: Crashbox
- 4 -: mittlerer Längenabschnitt
- 5 -: Verstärkungsblech
- 6 -: Vorderwand zu 2
- 7 -: Ende zu 5
- 8 -: Rückwand zu 2
- 9 -: verschweißter Längenabschnitt
- 10 -: nicht verschweißter Längenabschnitt
- 11 -: Obergurt
- 12 -: Untergurt
- 13 -: Schließblech
- 14 -: Hutprofil
- 15 -: weiterer Längenabschnitt
- 16 -: Pohl/Pfahl
- 17 -: Knickstelle
- 18 -: Aufwölbung
- 19 -: Verschweißung
- 20 -: Entlastungselement
- 21 -: Rückwand zu 5

- A -: Abstand
- T -: Tiefe
- T7 -: Tiefe zu 7
- T15 -: Tiefe zu 15
- L -: Länge zu 2
- X -: Kraftfahrzeuglängsrichtung
- Y -: Kraftfahrzeugvertikalrichtung

## Patentansprüche

1. Stoßfängerquerträger (2) für ein Kraftfahrzeug, welcher sich in Kraftfahrzeugquerrichtung (Y) erstreckt und im Querschnitt ein Hohlprofil aufweist, insbesondere einen rechteckigen Querschnitt, und in einem mittleren Längenabschnitt (4) des Hohlprofils ein Verstärkungsblech (5) eingesetzt ist, wobei die Tiefe (T) des Verstärkungsbleches (5) in Kraftfahrzeuglängsrichtung (X) zu den Enden (7) des Verstärkungsbleches (5) abnimmt, wobei das Hohlprofil als Hutprofil (14) ausgebildet ist mit einem Schließblech (13) und das Schließblech (13) in Kraftfahrzeuglängsrichtung (X) nach vorn zeigend angeordnet ist und das Verstärkungsblech (5) mit dem Schließblech (13) gekoppelt ist, **dadurch gekennzeichnet, dass** die Verjüngung des Querschnittes des Verstärkungsbleches (5) einen größeren Abstand (A) zu einer Rückwand (8) des Hohlprofils des Querträgers (8) ausbildet, in Relation zu einem mittleren Abschnitt.

2. Stoßfängerquerträger (2) nach dem vorhergehenden Anspruch, **dadurch gekennzeichnet, dass** das Verstärkungsblech (5) im Querschnitt profiliert, insbesondere W-förmig ausgebildet ist.

3. Stoßfängerquerträger (2) nach einem der vorangegangenen Ansprüche, **dadurch gekennzeichnet, dass** das Verstärkungsblech (5) sich in Kraftfahrzeugquerrichtung (Y) über eine Länge (L) zwischen 20 und 50%, bevorzugt zwischen 20 und 40% der Länge des Stoßfängerquerträgers (2) erstreckt.

4. Stoßfängerquerträger (2) nach einem der vorangegangenen Ansprüche **dadurch gekennzeichnet, dass** das Verstärkungsblech (5) im Querschnitt wenigstens zwei Schenkel aufweist, welche parallel oder in einem Winkel von nicht mehr als +/-20° zu einem Obergurt und einem Untergurt des Stoßfängerquerträgers (2) angeordnet sind.

5. Stoßfängerquerträger (2) nach einem der vorangegangenen Ansprüche, **dadurch gekennzeichnet, dass** die verjüngten Enden des Verstärkungsbleches (5) durch ein schneidtechnisches Verfahren hergestellt sind oder dass die verjüngten Enden (7) des Verstärkungsbleches (5) durch Abflachen bzw. Verprägen hergestellt sind oder das Verstärkungsblech pressformtechnisch hergestellt ist.

6. Stoßfängerquerträger (2) nach einem der vorangegangenen Ansprüche, **dadurch gekennzeichnet, dass** das Verstärkungsblech (5) längenabschnittsweise, mit einer Vorderwand (6) gekoppelt ist, insbesondere verschweißt.

7. Stoßfängerquerträger (2) nach einem der vorangegangenen Ansprüche, **dadurch gekennzeichnet, dass** der Querträger (2) in einem mittleren Längenabschnitt in einem Obergurt (11) und/oder in einem Untergurt (12) eine Softzone aufweist.

8. Stoßfängerquerträger (1) nach einem der vorangegangenen Ansprüche **dadurch gekennzeichnet, dass** der Stoßfängerquerträger (1) durch ein Hutprofil 14 ausgebildet ist mit einem vorne liegenden Schließblech (13), wobei das Verstärkungsblech (15) mit dem Schließblech (13) gekoppelt ist.

9. Stoßfängerquerträgeranordnung (1), **dadurch gekennzeichnet, dass** sie einen Stoßfängerquerträger (2) mit den Merkmalen von mindestens Patentanspruch 1 aufweist, welcher mit Crashboxen (3) gekoppelt ist.

10. Stoßfängerquerträgeranordnung (1) nach Anspruch 9, **dadurch gekennzeichnet, dass** die Crashboxen (3) an ihren aufeinander zu zeigenden Seiten in einem vorderen Bereich Entlastungselemente (20) aufweisen.

## Claims

1. Bumper cross member (2) for a motor vehicle, which bumper cross member extends in the transverse direction (Y) of the motor vehicle and has a hollow profile in cross-section, in particular a rectangular cross-section, and a reinforcing plate (5) is inserted in a middle length portion (4) of the hollow profile, wherein the depth (T) of the reinforcing plate (5) decreases in the longitudinal direction (X) of the motor vehicle towards the ends (7) of the reinforcing plate (5), wherein the hollow profile is formed as a hat profile (14) with a striking plate (13) and the striking plate (13) is arranged so as to point forwards in the longitudinal direction (X) of the motor vehicle and the reinforcing plate (5) is coupled to the striking plate (13), **characterised in that** the tapering of the cross-section of the reinforcing plate (5) forms a greater distance (A) to a rear wall (8) of the hollow profile of the cross member (8), in relation to a middle portion.

2. Bumper cross member (2) according to the preceding claim, **characterised in that** the reinforcing plate (5) is profiled in cross-section, in particular W-shaped.

3. Bumper cross member (2) according to any one of the preceding claims, **characterised in that** the reinforcing plate (5) extends in the transverse direction (Y) of the motor vehicle over a length (L) of between 20 and 50%, preferably between 20 and 40%, of the length of the bumper cross member (2).

4. Bumper cross member (2) according to any one of the preceding claims, **characterised in that**, in cross-section, the reinforcing plate (5) has at least two legs which are arranged parallel or at an angle of no more than +/-20° with respect to an upper flange and a lower flange of the bumper cross member (2).

5. Bumper cross member (2) according to any one of the preceding claims, **characterised in that** the tapered ends of the reinforcing plate (5) are produced by a cutting method or **in that** the tapered ends (7) of the reinforcing plate (5) are produced by flattening or stamping or the reinforcing plate is produced by press moulding.

6. Bumper cross member (2) according to any one of the preceding claims, **characterised in that** the reinforcing plate (5) is coupled, in particular welded, to a front wall (6) in length portions.

7. Bumper cross member (2) according to any one of the preceding claims, **characterised in that** the cross member (2) has a soft zone in a middle length portion in an upper flange (11) and/or in a lower flange (12).

8. Bumper cross member (1) according to any one of the preceding claims, **characterised in that** the bumper cross member (1) is formed by a hat profile (14) having a striking plate (13) located at the front, wherein the reinforcing plate (15) is coupled to the striking plate (13).

9. Bumper cross member arrangement (1), **characterised in that** it has a bumper cross member (2) with the features of at least claim 1, which bumper cross member is coupled to crash boxes (3).

10. Bumper cross member arrangement (1) according to claim 9, **characterised in that** the crash boxes (3) have relieving elements (20) in a front region on their sides which point towards one another.

## Revendications

1. Traverse de pare-chocs (2) pour un véhicule automobile, qui s'étend dans le sens transversal du véhicule automobile (Y) et présente en section transversale un profil creux, en particulier une section transversale rectangulaire, et une tôle de renforcement (5) est insérée dans une section longitudinale (4) médiane du profil creux, dans laquelle la profondeur (T) de la tôle de renforcement (5) diminue dans le sens longitudinal du véhicule automobile (X) jusqu'aux extrémités (7) de la tôle de renforcement (5), dans laquelle le profil creux est réalisé comme profil en chapeau (14) avec une tôle de fermeture (13) et la tôle de fermeture (13) est agencée tournée vers l'avant dans le sens longitudinal du véhicule automobile (X) et la tôle de renforcement (5) est couplée à la tôle de fermeture (13), **caractérisée en ce que** le rétrécissement de la section transversale de la tôle de renforcement (5) forme une distance supérieure (A) par rapport à une paroi arrière (8) du profil creux de la traverse (8), en relation avec une section médiane.

2. Traverse de pare-chocs (2) selon la revendication précédente, **caractérisée en ce que** la tôle de renforcement (5) est profilée en section transversale, en particulier est formée en W.

3. Traverse de pare-chocs (2) selon l'une quelconque des revendications précédentes, **caractérisée en ce que** la tôle de renforcement (5) s'étend dans le sens transversal du véhicule automobile (Y) sur une longueur (L) entre 20 et 50 %, de préférence entre 20 et 40 % de la longueur de la traverse de pare-chocs (2).

4. Traverse de pare-chocs (2) selon l'une quelconque des revendications précédentes, **caractérisée en ce que** la tôle de renforcement (5) présente en section transversale au moins deux branches qui sont agencées parallèlement ou selon un angle de pas plus de +/-20° par rapport à une membrure supérieure et à une membrure inférieure de la traverse de pare-chocs (2).

5. Traverse de pare-chocs (2) selon l'une quelconque des revendications précédentes, **caractérisée en ce que** les extrémités rétrécies de la tôle de renforcement (5) sont fabriquées par un procédé de technique de coupe ou **en ce que** les extrémités rétrécies (7) de la tôle de renforcement (5) sont fabriquées par aplatissement ou matriçage ou la tôle de renforcement est fabriquée par technique de moulage sous pression.

6. Traverse de pare-chocs (2) selon l'une quelconque des revendications précédentes, **caractérisée en ce que** la tôle de renforcement (5) est couplée, en particulier soudée, par section longitudinale, à une paroi avant (6).

7. Traverse de pare-chocs (2) selon l'une quelconque des revendications précédentes, **caractérisée en ce que** la traverse (2) présente une zone souple dans une section longitudinale médiane dans une membrure supérieure (11) et/ou dans une membrure inférieure (12).

8. Traverse de pare-chocs (1) selon l'une quelconque des revendications précédentes, **caractérisée en ce que** la traverse de pare-chocs (1) est formée par un profil en chapeau (14) avec une tôle de fermeture (13) se trouvant à l'avant, dans laquelle la tôle de renforcement (15) est couplée à la tôle de fermeture (13).

9. Agencement de traverse de pare-chocs (1), **caractérisé en ce qu'**il présente une traverse de pare-chocs (2) avec les caractéristiques d'au moins la revendication 1 qui est couplée à des absorbeurs de chocs (3).

10. Agencement de traverse de pare-chocs (1) selon la revendication 9, **caractérisé en ce que** les absorbeurs de chocs (3) présentent des éléments de décharge (20) au niveau de leurs côtés tournés les uns vers les autres dans une zone avant.
